# FASCICULE DE BREVET EUROPEEN

(11) **EP 2 410 320 B1**
(45) Date de publication et mention de la délivrance du brevet: **03.04.2013**
(21) Numéro de dépôt: 11173311.9
(22) Date de dépôt: 08.07.2011
(51) Int. Cl.: G01N 27/12

(54) **Procédé de fonctionnalisation sélective d'un matériau conducteur ou semiconducteur par activation thermique par effet joule**
Verfahren zur selektiven Funktionaliserung eines leitfähigen oder halbleitenden Werkstoffs durch thermische Aktivierung mittels joulschen Effektes
Process of selective functionalization of a conductive or semiconductor material by joule effect thermal activation

(30) Priorité: 19.07.2010 FR 1055863
(43) Date de publication de la demande: 25.01.2012
(73) Titulaire: COMMISSARIAT A L'ENERGIE ATOMIQUE ET AUX ENERGIES ALTERNATIVES, 75015 Paris (FR)
(72) Inventeur: Carella, M. Alexandre, 64110 MAZERES LEZONS (FR); Simonato, M. Jean-Pierre, 38360 SASSENAGE (FR)
(74) Mandataire: Dias, Sonia

(56) Documents cités:
- FR-A1- 2 262 300
- FR-A1- 2 934 685
- S. CLAVAGUERA ET AL: "Sub-ppm Detection of Nerve Agents Using Chemically Functionalized Silicon Nanoribbon Field-Effect Transistors", ANGEWANDTE CHEMIE INTERNATIONAL EDITION, vol. 49, 30 avril 2010 (2010-04-30), pages 4063-4066, XP002623523,
- PARK I ET AL: "Multifunctional nanowire array for chemical sensing and manipulation", SOLID-STATE SENSORS, ACTUATORS AND MICROSYSTEMS CONFERENCE, 2009. TRANSDUCERS 2009. INTERNATIONAL, IEEE, PISCATAWAY, NJ, USA, 21 juin 2009 (2009-06-21), pages 473-476, XP031545379, ISBN: 978-1-4244-4190-7
- PRADES J ET AL: "Ultralow power consumption gas sensors based on self-heated individual nanowires", APPLIED PHYSICS LETTERS, AIP, AMERICAN INSTITUTE OF PHYSICS, MELVILLE, NY, US, vol. 93, no. 12, 24 septembre 2008 (2008-09-24), pages 123110-123110, XP012111599, ISSN: 0003-6951, DOI: DOI:10.1063/1.2988265
- BURIAK J M ET AL: "LEWIS ACID MEDIATED FUNCTIONALIZATION OF POROUS SILICON WITH SUBSTITUTED ALKENES AND ALKYNES", JOURNAL OF THE AMERICAN CHEMICAL SOCIETY, AMERICAN CHEMICAL SOCIETY, US, vol. 120, 1 février 1998 (1998-02-01), XP002920673, ISSN: 0002-7863, DOI: DOI:10.1021/JA9740125
- D. EVRARD ET AL: "Electrochemical Functionalization of Carbon Surfaces by Aromatic Azide or Alkyne Molecules: A Versatile Platform for Click Chemistry", CHEMISTRY - A EUROPEAN JOURNAL, vol. 14, no. 30, 9 septembre 2008 (2008-09-09), pages 9286-9291, XP002623524,

## Description

La présente invention concerne un procédé de fonctionnalisation sélective de matériaux conducteurs ou semiconducteurs, .

Les capteurs chimiques à base de nanofils ont suscité ces dernières années un grand intérêt donnant lieu à de nombreux développements rapportés dans la littérature. En particulier, les nanofils de silicium ont été décrits comme capteurs pour la détection du pH d'une solution de protéines (Cui, Y.; Wei, Q.; Park, H.; Liber, C. M. Science 2001, 293, 1289-1292), ou encore de molécules gazeuses (Zhou, X. T.; Hu, J. Q.; Li, C. P.; Ma, D. D.; Lee, C. S.; Lee, S. T. Chem. Phys. Lett. 2003, 369, 220-224) et d'autres molécules d'intérêt. Le mécanisme de détection dans ces capteurs à base de nanofils de silicium est généralement basé sur leur changement de conductance électrique en présence de molécules chimiques chargées ou de molécules biologiques à leur surface.

De façon générale, la détection de ces molécules cibles n'est rendue possible qu'après une fonctionnalisation chimique appropriée de la surface des nanofils de silicium avec des molécules « sondes » capables d'interagir spécifiquement avec les molécules cibles à détecter. La plupart du temps, ces capteurs sont utilisés sous forme de matrices dans lesquelles la fonctionnalisation sélective des nanofils est primordiale.

Plusieurs méthodes visant à localiser la fonctionnalisation de surface ont été décrites dans la littérature, notamment des méthodes basées sur l'attraction électrostatique entre les molécules sondes (ou molécules réceptrices), et le nanofil, la définition photolitographique d'une couche hydrophobe, l'impression par microcontact, la nanolithographie « Dip-Pen » et les méthodes électrochimiques.

Toutefois, la méthode basée sur l'attraction électrostatique ne permet pas d'obtenir une bonne sélectivité de la modification de surface par rapport aux zones environnantes et ne peut être utilisée pour greffer des molécules réceptrices neutres ou faiblement chargées.

Les procédés d'impression par photolithographie et microcontact ne permettent pas d'obtenir une localisation ultrafine, à l'échelle nanométrique notamment.

En outre, les techniques d'impression requièrent également un alignement précis des micro/nanostructures préfabriquées. La nanolithographie Dip-pen offre une excellente flexibilité tant au niveau de la localisation de la fonctionnalisation sélective de surface, qu'au niveau des molécules pouvant être greffées. Toutefois cette technique nécessite l'utilisation d'un équipement onéreux, et n'est pas adapté à une fonctionnalisation de surface à grande échelle. Enfin, les méthodes électrochimiques sont limitées par le choix des groupes fonctionnels qui doivent présenter des propriétés oxydoréductrices.

Plus récemment, une méthode de fonctionnalisation sélective de nanofils de silicium utilisant l'effet Joule a été décrite. Plus précisément, cette méthode est basée sur l'échauffement dû à un effort Joule obtenu de façon très localisé à l'échelle nanométrique, lors de l'application d'un champ électrique aux bornes d'un nanofil de silicium (Inkyu Patk ; Zhiyong Li ; Albert P. Pisano et R. Stanley Williams Nano Lett., 2007, 7 (10), pp 3106-3111). Cet échauffement très localisé peut être utilisé pour éliminer sélectivement une couche protectrice de polymère recouvrant une zone présélectionnée d'un nanofil de silicium. Après un post-traitement approprié, la surface ainsi exposée peut alors subir une fonctionnalisation par des molécules chimiques, tandis que les autres zones avoisinantes du nanofil demeurent protégées par la couche de polymère chimiquement inerte.

Toutefois, cette méthode de fonctionnalisation de surface nécessite préalablement une étape de revêtement des nanofils de silicium par une couche de polymère, puis éventuellement une étape d'élimination de la couche protectrice de polymère une fois la fonctionnalisation de surface réalisée.

Il a maintenant été mis au point un nouveau procédé permettant de fonctionnaliser sélectivement la surface d'un matériau conducteur ou semiconducteur, à l'échelle nanométrique. Plus précisément, ce procédé utilise l'énergie thermique générée localement par effet Joule pour activer le matériau conducteur ou semiconducteur vis-à-vis de réactions chimiques.

Ainsi, lorsque l'on applique une différence de potentiel aux bornes de deux électrodes situées de part et d'autre d'un matériau semiconducteur tel qu'un nanofll de silicium, une partie de l'énergie électrique est convertie en énergie thermique par effet Joule. Le nanofil se transforme alors en résistance, chauffant localement la solution ou le gaz contenant le(s) molécule(s) réceptrice(s) à greffer.

De façon avantageuse, ce procédé permet une fonctionnalisation de surface très sélective dans la mesure où seuls les nanofils activés électriquement et donc thermiquement seront fonctionnalisés par les molécules réceptrices.

En outre, ce procédé, facile à mettre en oeuvre, peut être réalisé en un nombre d'étapes limité. Ainsi, il ne nécessite pas notamment l'application préalable d'une couche de polymère sur le matériau à fonctionnaliser sélectivement. De plus, il peut être aisément transposé à l'échelle industrielle.

Ainsi, un premier objet de l'invention concerne un procédé de fonctionnalisation d'un matériau (M) conducteur ou semiconducteur par greffage covalent de molécules réceptrices (R) à sa surface, ledit procédé comprenant les étapes suivantes :
i. Appliquer entre les bornes d'une électrode source et d'une électrode drain situées de part et d'autre du matériau (M), une différence de potentiel suffisante pour activer thermiquement le matériau (M) vis-à-vis de la réaction de greffage des molécules (R) ;
ii. Mettre en contact le matériau (M) ainsi activé avec un milieu liquide ou gazeux contenant les molécules réceptrices (R), ce par quoi on obtient un matériau (M) fonctionnalisé par des molécules réceptrices (R) greffées de façon covalente.

### Matériau (M) conducteur ou semiconducteur

Selon un aspect, le matériau (M) est un nanomatériau, *ie* un matériau dont l'une au moins des caractéristiques morphologiques se situent dans le domaine nanométrique, *ie* un matériau dont l'une des dimensions est inférieure à 100 nm. Comme exemple de nanomatériaux, on peut notamment citer les nanofils, nanorubans, ou nanotubes, en particulier les nanofils de silicium et les nanotubes de carbone.

Le matériau (M) peut être un matériau conducteur ou semiconducteur.

Selon un aspect préféré, le matériau (M) est un matériau semiconducteur, notamment un matériau à base de carbone, silicium, germanium, zinc, gallium, indium, cadmium ou un matériau semiconducteur organique.

Selon un aspect préféré, le matériau semiconducteur est un matériau à base de silicium, notamment un matériau comprenant ou constitué de nanofil(s) ou de nanoruban(s) de silicium, ou un matériau à base de carbone, notamment un matériau comprenant ou constitué de nanotubes de carbone ou de feuillets de carbone.

De préférence, le matériau (M) est un matériau comprenant au moins 30 %, de préférence au moins 50 % en poids, de préférence 75 % en poids, de silicium, par rapport au poids total du matériau.

Plus préférablement, le matériau semiconducteur est constitué de nanofil(s) de silicium gravé(s) sur une surface SOI (Silicon On Insulator).

Selon un mode de réalisation particulièrement préféré, le matériau (M) est un nanofil de silicium compris dans une matrice contenant plusieurs autres nanofils de silicium. De façon avantageuse, le procédé selon l'invention permet de différencier les différents nanofils de silicium et de fonctionnaliser sélectivement un ou plusieurs de ces nanofils.

Dans le cas de matériaux semiconducteurs organiques, ceux-ci peuvent être des oligomères, des polymères ou des petites molécules. Par exemple, il peut s'agir de composés aromatiques hétérocycliques tels que les thiophènes et leurs dérivés, de préférence le P3HT (poly-3-hexylthiophène), ou les polypyrroles et leurs dérivés, les arylamines et leurs dérivés, de préférence le PTA (polytriarylamine), les isochromenones et leurs dérivés, des macrocycles hétérocycliques tels que les porphyrines, les phtalocyanines et leurs dérivés. Les matériaux semiconducteurs organiques peuvent également être des acènes polycycliques aromatiques et leurs dérivés, de préférence l'anthracène ou le pentacène, des arylènes et leurs dérivés, par exemple le perylène, le polyparaphényléne, le polyparaphénylènevinyléne ou le polyfluorène, des polysilanes et leurs dérivés.

### Réaction de greffage des molécules réceptrices

Telle qu'employée ici, l'expression « molécule réceptrice » désigne une molécule susceptible d'interagir avec une molécule cible, par exemple une molécule biologique ou un analyte. La molécule réceptrice peut notamment comprendre une partie (A) susceptible d'assurer la reconnaissance de la molécule cible à détecter et une fonction réactive (X) susceptible de se lier de façon covalente à la surface du matériau (M) lorsque celui-ci est activé. La partie (A) assurant la reconnaissance spécifique peut comprendre notamment un polynucléotide, un polypeptide, un aptamère, un récepteur biologique, ou un ligand.

Telle qu'employée ici, l'expression « une différence de potentiel suffisante pour activer thermiquement le matériau (M) vis-à-vis de la réaction de greffage des molécules (R) », signifie que l'énergie thermique générée par effet Joule permet de chauffer le matériau (M) à une température (T) suffisante pour activer la réaction de greffage des molécules (R) sur le matériau (M). Lors de l'étape (ii), cette différence de potentiel est maintenue, de sorte que le matériau (M) activé à l'étape (i) est mis en contact avec le milieu contenant les molécules réceptrices (R) à une température supérieure ou égale à ladite température d'activation (T).

L'étape d'activation (i) du matériau (M) par application de ladite différence de potentiel peut être réalisée, préalablement, postérieurement ou simultanément à l'étape (ii), *ie* à la mise en contact avec le milieu contenant les molécules réceptrices (R).

De préférence, le matériau (M) est mis en contact avec un milieu liquide contenant les molécules réceptrices (R), notamment une solution de (R) dans un solvant organique tel que le mésitylène.

Lorsque le matériau (M) est à base de silicium, la réaction de greffage est notamment une réaction d'hydrosilylation, *ie* une réaction d'addition d'une fonction hydrogénosilane (Si-H) sur une molécule réceptrice comprenant une fonction organique X insaturée, en particulier une fonction éthylénique (double liaison C=C) ou acétylénique (triple liaison C=C). La réaction de greffage conduit alors généralement à la formation d'une liaison covalente de type Si-C entre le matériau (M) et la molécule réceptrice. La réaction d'hydrosylilation peut notamment être activée lorsque le matériau (M) atteint localement une température supérieure à 200°C.

De préférence, lorsque le matériau est à base de nanofils de silicium, la différence de potentiel (en valeur absolue) est comprise entre 2 et 10 V, et notamment d'environ 5 V.

Selon une variante préférée, les molécules réceptrices (R) comprennent un groupe X choisi parmi -C≡C-, -HC=CH-, de préférence un groupe Ar-C≡C-, où Ar représente un groupement aryle en C₅-C₁₀. Les molécules réceptrices sont de préférence choisies parmi le ferrocène d'éthynyle ou le 4-éthynyltabinol.

Selon une autre variante, les molécules réceptrices comprennent un sel de diazonium, un triazène ou un diène. Dans ce cadre, les molécules réceptrices sont de préférence choisies parmi le ferrocène diazonium ou le 4-diazobenzyltabinol.

Le 4-éthynyltabinol est en effet un récepteur spécifique des composés organophosphorés. L'exposition de cette molécule réceptrice à un composé organophosphoré conduit à la formation d'un intermédiaire phosphate ester instable par réaction entre l'alcool primaire et le composé organophosphoré. Il s'ensuit une cyclisation intramoléculaire par substitution nucléophile de l'intermédiaire phosphate ester par l'amine tertiaire et la formation d'un ammonium quaternaire. Lors de la réaction de cyclisation, il y a formation d'un sel, et donc génération de charges électriques distinctes (cation et anion). La génération d'une charge par la création de la fonction ammonium permet de modifier de façon brutale l'environnement électrostatique de la molécule. La présence de composés organophosphorés est donc mise en évidence en visualisant les modifications de l'environnement électrostatique local par analyse des variations de la résistance, de conductance ou de la transconductance d'un dispositif électrique dans lequel la molécule "réceptrice" est greffée sur le matériau semiconducteur. On détecte par ce dispositif électrique la présence d'au moins une charge créée par la réaction entre le composé organophosphoré et la molécule réceptrice.

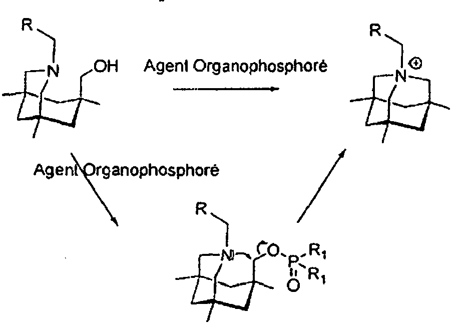

Un tel dispositif a notamment été décrit dans la demande de brevet FR 2 934 685 du 5 février 2010.

Selon un deuxième objet, l'invention concerne un matériau (M) conducteur ou semiconducteur fonctionnalisé par greffage de fonctions réceptrices (R) susceptibles d'être obtenues selon le procédé de l'invention.

Selon un troisième aspect, l'invention concerne un dispositif électrique (capteur chimique) comprenant une électrode drain et une électrode source séparées par un matériau (M) conducteur ou semiconducteur, dans lequel le matériau (M) est un matériau susceptible d'être obtenu selon le procédé de l'invention.

Lorsque la molécule réceptrice greffée à la surface du matériau (M) interagit avec la molécule cible, elle induit une variation du signal électrique. Cette variation peut être une variation de conductance, de courant, de transductance, de capacitance, de tension de seuil ou une combinaison de celles-ci.

Le dispositif électrique peut être de type résistance, ou bien de type transistor à effet de champ.

Lorsque le dispositif électrique est du type résistance, on détecte et, éventuellement, on mesure, par exemple, la variation de l'intensité du courant entre les électrodes source et drain.

A titre d'exemple, dans le cas d'un matériau (M) fonctionnalisé par greffage du 4-éthynyltabinol, une variation d'intensité de courant est provoquée par la production de charges positives lors de la cyclisation de la molécule réceptrice, lorsqu'elle entre en contact avec les composés organophosphorés, à une tension donnée et connue imposée entre les électrodes source et drain. Cette variation d'intensité de courant donne accès à la variation de conductance.

Lorsque le dispositif électrique est du type transistor, la partie semiconductrice est composée d'un matériau semiconducteur diélectrique et comporte de plus une grille.

Là encore, on détecte et, éventuellement, on mesure, par exemple, la variation de l'intensité du courant, à une tension donnée et connue imposée entre les électrodes source et drain traversant le transistor. L'intensité du courant étant une fonction de la tension de la grille, on a alors accès à la transconductance du transistor.

Dans les deux cas, la variation de la conductance ou la variation de transconductance est révélatrice de la présence des composés à détecter et est proportionnelle à leur concentration.

### Définitions

Par « nanofil » ou « nanotube », on entend un fil ou un tube, respectivement, dont le diamètre est inférieur à 100 nm, notamment entre 20 et 50 nm.

Par « nanoruban », on entend un ruban dont l'épaisseur est inférieure à 100 nm, notamment comprise entre 20 et 70 nm. Les deux autres dimensions sont dans un rapport supérieur à 2.

Par « conducteur », on entend un matériau conducteur électrique, *ie* portant une ou plusieurs charges électriques mobiles. De préférence, le matériau conducteur présente une résistance suffisamment élevée pour que son échauffement puisse être utilisé. Plus préférentiellement, la résistance du matériau conducteur est supérieure ou égale à 1000 ohms.

Par « matériau semiconducteur », on entend un matériau possédant une conductibilité électrique comprise entre celle des métaux et celle des matériaux isolants.

### FIGURE :

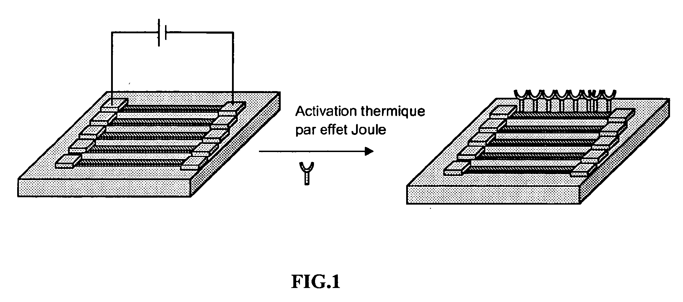

Figure 1 : La figure 1 est une représentation schématique du procédé de fonctionnalisation de surface selon l'invention.

### EXEMPLES

### Exemple 1 : Fonctionnalisation sélective d'un nanoruban de Silicium

### • Fabrication de nanorubans de Silicium

Des nanofils de silicium ont été préparés à partir d'une tranche (*« wafer »)* de SOI (Silicon On Insulator). Le wafer de SOI comprend une couche de Si cristallin de 70 nm dopé au Bore (10¹⁵ at.cm⁻³) sur un oxyde enterré de 140 nm. Les fils de Si ont été fabriqués par lithographie électronique et gravure sous faisceau d'ions (*« Réactive Ion Etching » ou* « *(RIE)»)*. Une couche fine de 45 nm de résine négative (HSQ FOX 12) a été déposée à la tournette sur la tranche de SOI propre et désoxydée. La résine a été développée en trempant le substrat dans une solution à 25 % dans l'eau d'hydroxyde de tétraméthylammonium (TMAOH) pendant 1 minute après exposition à un faisceau électronique.

Après gravure sous faisceau d'ions (RIE), avec un SF6 15 sccm / N₂ 10 sccm / O₂ 10 sccm plasma (10 mT, 50 W, 80 s dans un système Plasmalab, Oxford Instrument), des nanorubans de différentes longueurs et largeurs (4 x 4 µm, 4 x 1 µm, 2 x 1µm et 2 x 0.2µm), connectés à des plots carrés de silicium de 30 µm x 30 µm pour les contacts source et drain, ont été obtenus. Enfin, la résine HSQ a été enlevée par gravure chimique (HF 1 %, 1min). Cette étape a réduit l'épaisseur du SiO₂ exposé à 134 nm. Les larges contacts métalliques (100 µm x 100 µm) sur plots de silicium de 30 µm x 30 µm ont été définis par lithographie électronique par l'application de deux couches de résine (copolymère EL 10 % - MMA 17.5 % et PMMA 3 % 495 K), ayant une épaisseur respective de 610 nm et 60 nm, déposées à la tournette. Après exposition à un faisceau électronique, la résine a été développée avec une solution de 1/3 de Méthylisobutylcétone (MIBK) et 2/3 d'isopropanol pendant 60 s. La couche métallique (titanium 10 nm et Or 100 nm) a ensuite été déposée à l'aide d'un évaporateur (« *e-beam evaporator* ») sous vide. L'étape de gravure avec décollement de résine *(« lift-off »)* a été réalisée dans un bain d'acétone.

### • Fonctionnalisation sélective d'un nanoruban par le ferrocène d'éthynyle

Un potentiel de 5V a été appliqué entre les électrodes source et drain d'un nanoruban. Le dispositif a ensuite été immergé dans une solution de ferrocène d'éthyzlyle (10 mM) dans le mesitylène. Selon l'écartement des électrodes, la tension peut être comprise entre 2 et 10 V.

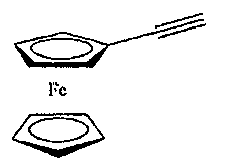

Après rinçage au mésitylène et au dichlorométhane, l'analyse par spectroscopie Auger, XPS et IR montre que seul le nanoruban connecté a été fonctionnalisé.

### • Fonctionnalisation sélective d'un nanoruban avec un récepteur spécifique des gaz organophosphorés

Un potentiel de 5V est appliqué entre les électrodes source et drain d'un nanoruban et le dispositif est immergé dans une solution de 4-éthynyltabinol (structure ci-dessous) (1mM) dans le mésitylène.

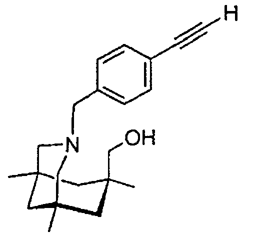

Après rinçage au mésitylene et au dichlorométhane, l'analyse par spectroscopie Auger, XPS et IR montre que seul le nanoruban connecte a été fonctionnalisé.

## Revendications

1. Procédé de fonctionnalisation d'un matériau (M) conducteur ou semiconducteur par greffage covalent de molécules réceptrices (R) à sa surface, ledit procédé comprenant les étapes suivantes :
i) Appliquer entre les bornes d'une électrode source et d'une électrode drain situées de part et d'autre du matériau (M), une différence de potentiel suffisante pour activer thermiquement le matériau (M) vis-à-vis de la réaction de greffage des molécules (R) ;
ii) Mettre en contact le matériau (M) ainsi activé avec un milieu liquide ou gazeux contenant les molécules réceptrices (R), ce par quoi on obtient un matériau (M) fonctionnalisé par des molécules réceptrices (R) greffées de façon covalente.

2. Procédé selon la revendication 1, dans lequel le matériau (M) est un matériau semiconducteur.

3. Procédé selon la revendication 2, dans lequel le matériau semiconducteur est un matériau à base de carbone, silicium, germanium, zinc, gallium, indium, cadmium ou un matériau semiconducteur organique

4. Procédé selon la revendication 3, dans lequel le matériau semiconducteur est un matériau à base de silicium.

5. Procédé selon la revendication 4, dans lequel le matériau (M) comprend des nanofils ou des nanorubans de silicium.

6. Procédé selon la revendication 3, dans lequel le matériau (M) est à base de carbone.

7. Procédé selon la revendication 6, dans lequel le matériau (M) comprend des nanotubes ou des feuillets de carbone.

8. Procédé selon la revendication 4 précédente, dans lequel les molécules réceptrices (R) comprennent un groupe -C≡C-, ou -HC=CH-.

9. Procédé selon la revendication 8, dans lequel les molécules réceptrices sont choisies parmi le ferrocène d'éthynyle ou le 4-éthynyltabinol.

10. Procédé selon l'une quelconque des revendications 6 ou 7, dans lequel les molécules réceptrices comprennent un sel de diazonium, un triazène ou un diène.

11. Procédé selon la revendication 10, dans lequel les molécules réceptrices sont choisies parmi le ferrocène diazonium ou le 4-diazobenzyltabinol.

## Claims

1. Method of functionalising a conductive or semiconductor material (M) by covalent grafting of receptor molecules (R) to its surface, said method comprising the following steps:
i) applying a sufficient potential difference across the terminals of a source electrode and a drain electrode disposed on either side of the material (M) to thermally activate the material (M) in readiness for the reaction of grafting the molecules (R);
ii) placing the material (M) thus activated in contact with a liquid or gaseous medium containing the receptor molecules (R), thereby obtaining a material (M) functionalised by the covalently grafted receptor molecules (R).

2. Method as claimed in claim 1, in which the material (M) is a semiconductor material.

3. Method as claimed in claim 2, in which the semiconductor material is a material based on carbon, silicon, germanium, zinc, gallium, indium, cadmium or an organic semiconductor material.

4. Method as claimed in claim 3, in which the semiconductor material is a silicon-based material.

5. Method as claimed in claim 4, in which the material (M) comprises silicon nanowires or nanoribbons.

6. Method as claimed in claim 3, in which the material (M) is carbon-based.

7. Method as claimed in claim 6, in which the material (M) comprises carbon nanotubes or sheets.

8. Method as claimed in preceding claim 4, in which the receptor molecules (R) contain a -C≡C- or -HC=CH- group.

9. Method as claimed in claim 8, in which the receptor molecules are selected from ethynylferrocene or 4-ethynyltabinol.

10. Method as claimed in any one of claims 6 or 7, in which the receptor molecules contain a diazonium salt, a triazene or a diene.

11. Method as claimed in claim 10, in which the receptor molecules are selected from diazonium ferrocene or 4-diazobenzyltabinol.

## Patentansprüche

1. Verfahren zur Funktionalisierung eines leitfähigen oder halbleitenden Materials (M) durch kovalente Pfropfung von Rezeptormolekülen (R) an seine Oberfläche, wobei das Verfahren die folgenden Stufen umfasst:
i) Anlegen zwischen den Grenzen einer Sourceelektrode und eine Drainelektrode, die sich auf beiden Seiten des Materials (M) befinden, eine ausreichende Potentialdifferenz, um das Material (M) gegenüber der Pfropfungsreaktion der Moleküle (R) thermisch zu aktivieren;
ii) Inkontaktbringen des so aktivierten Materials (M) mit einem flüssigen oder gasförmigen Milieu, das die Rezeptormoleküle (R) enthält, damit man ein Material (M) erhält, das durch in kovalenter Art gepfropfte Rezeptormoleküle (R) funktionalisiert ist.

2. Verfahren gemäß Anspruch 1, in dem das Material (M) ein halbleitendes Material ist.

3. Verfahren gemäß Anspruch 2, in dem das halbleitende Material ein Material auf der Basis von Kohlenstoff, Silicium, Germanium, Zink, Gallium, Indium, Cadmium oder ein organisches halbleitendes Material ist.

4. Verfahren gemäß Anspruch 3, in dem das halbleitende Material ein Material auf der Basis von Silicium ist.

5. Verfahren gemäß Anspruch 4, in dem das Material (M) Nanofasern oder Nanostreifen aus Silicium umfasst.

6. Verfahren gemäß Anspruch 3, in dem das Material (M) auf der Basis von Kohlenstoff ist.

7. Verfahren gemäß Anspruch 6, in dem das Material (M) Nanoröhren oder Plättchen aus Kohlenstoff umfasst.

8. Verfahren gemäß dem vorangehenden Anspruch 4, in dem die Rezeptormoleküle (R) eine Gruppe -C≡C- oder -HC=CH- umfassen.

9. Verfahren gemäß Anspruch 8, in dem die Rezeptormoleküle aus Ethinylferrocen oder 4-Ethinyltabinol ausgewählt sind.

10. Verfahren gemäß einem der Ansprüche 6 oder 7, in dem die Rezeptormoleküle ein Diazoniumsalz, ein Triazen oder ein Dien umfassen.

11. Verfahren gemäß Anspruch 10, in dem die Rezeptormoleküle aus Ferrocendiazonium oder 4-Diazobenzyltabinol ausgewählt sind.
